# EUROPÄISCHE PATENTSCHRIFT

(11) **EP 1 889 743 B1**
(45) Veröffentlichungstag und Bekanntmachung des Hinweises auf die Patenterteilung: **18.11.2009**
(21) Anmeldenummer: 07016021.3
(22) Anmeldetag: 15.08.2007
(51) Int. Cl.: B60K 17/04

(54) **Getriebe**
Gearbox
Engrenage

(30) Priorität: 15.08.2006 DE 102006038396
(43) Veröffentlichungstag der Anmeldung: 20.02.2008
(73) Patentinhaber: Kordel Antriebstechnik GmbH, 48249 Dülmen (DE)
(72) Erfinder: Raue, Josef, 48249 Dülmen (DE)
(74) Vertreter: Demski, Siegfried

(56) Entgegenhaltungen:
- US-A- 2 818 699
- US-A- 3 827 528
- US-A- 5 558 174

## Beschreibung

Die Erfindung betrifft Getriebe, vorzugsweise für eine Frontachse eines Flurförderfahrzeugs, aufweisend wenigstens eine Getriebestufe, ein Antriebsritzel, ein Hohlrad und ein Gehäuse, wobei das Antriebsritzel und das Hohlrad jeweils eine Drehachse aufweisen, die versetzt zueinander angeordnet sind, ein Laufrad drehfest unmittelbar mit dem Hohlrad verbindbar ist und das Antriebsritzel mit einem an das Getriebe anflanschbaren Antriebsmotor koppelbar ist, wobei das Hohlrad drehbar auf einem feststehenden Stützelement gelagert ist und nach erfolgter Montage an diesem Stützelement einen Teil des Gehäuses ausbildet, wobei das Stützelement koaxial zur Drehachse des Hohlrades angeordnet ist.

Gattungsgemäße Getriebe als Antriebe für Laufräder werden bevorzugt für Flurförderfahrzeuge verwendet, welche eine möglichst kleine Bauform aufweisen sollen und darüber hinaus zum Tragen größerer Lasten geeignet sein müssen. Um die Stabilität des Fahrzeuges zu gewährleisten, muss das Getriebe die erforderlichen Lasten problemlos aufnehmen können und sollte die Fahrzeugabmessungen hinsichtlich der Breite und Höhe möglichst nicht beeinflussen. Hierbei ist insbesondere darauf zu achten, dass das Fahrzeug einen möglichst tiefliegenden Schwerpunkt aufweist, um eine Kippgefahr zu verringern. Im Weiteren muss bei den gattungsgemäßen Getrieben darauf geachtet werden, dass die aufzunehmenden Kräfte des Fahrzeuges, unter Berücksichtigung einer Belastung von bis zu 5 Tonnen, über das Getriebegehäuse auf das Laufrad übertragen werden können.

Aus dem US Patent 5,558,174 ist beispielsweise eine Getriebeanordnung bekannt, die für Gabelstapler verwendet wird und zum Antrieb und zur Lenkung eines jeweils einzelnen angetriebenen Doppelrades vorgesehen ist. Zur Kraftübertragung wird ein Elektromotor verwendet, der über eine Kegelradverzahnung ein Kegelrad antreibt, welches wiederum drehfest auf einer Welle gehalten ist, während die Welle mit einer eng ausgebildeten Stirnverzahnung mit einer Innenverzahnung der Laufradnabe kämmt. Eine solche Anordnung wird vorzugsweise bei starren Achsen verwendet oder es werden die Laufräder zusammen mit den Elektromotoren und der Getriebeeinheit starr miteinander verschraubt und in einer schwenkbeweglichen Halterung aufgenommen, die eine Richtungssteuerung ermöglicht. Auf Grund der doppelten Anordnung von Laufrädern sind jedoch erhebliche Lenkkräfte erforderlich, um die unterschiedlichen Wegstrecken der beiden Laufräder bei einer Kurvenfahrt ohne Differenzial auszugleichen. Darüber hinaus ist die Baugröße des Getriebes sehr groß ausgefallen und die Übertragung der Lasten auf die Laufräder wurde nicht optimal gelöst.

Das US-Patent 3,827,528 offenbart ein zweiteilig aufgebautes Hohlrad, wobei eine Innenverzahnung des ersten Hohlrades mit einem Planetenrad kämmt, welches jedoch eine fliegende Lagerung aufweist. Das US-Patent 5,558,174 offenbart für einen Gabelstapler zwei Antriebseinheiten der Vorderräder, welche zum Antrieb der Laufräder ein Hohlrad verwenden und ein einzelnes Planetenrad, wobei dieses fliegend gelagert ist. Das US-Patent 2,818,669, offenbart eine Antriebsanordnung, welche ebenfalls mit einer fliegenden Lagerung des verwendeten Planetenrades arbeitet. Das Planetenrad kämmt hierbei mit einer Verzahnung mit der Innenverzahnung eines als Hohlrad ausgebildeten Reifenträgers.

Die bekannten Lösungen arbeiten ausschließlich mit einem fliegend gelagerten Planetenrad, welches als Welle ausgebildet ist, die einseitig über beabstandete Lagerelemente abgestützt ist und somit zu einem langbauenden Getriebe führt.

Der vorliegenden Erfindung liegt die Aufgabe zur Grunde, ein Getriebe aufzuzeigen, welches unter Verwendung weniger Bauteile kompaktbauend ausgeführt ist und gleichzeitig eine hohe Lastübertragung über das Gehäuse auf die Laufräder ermöglicht.

Erfindungsgemäß ist zur Lösung der Aufgabe vorgesehen, dass das Hohlrad über eine Innenverzahnung mit einem Planetenrad kämt, welches als Antriebswelle ausgebildet mit einer mittig angeordneten Verzahnung ausgestattet ist und zu beiden Seiten der Verzahnung über ein Lagerelement abgestützt ist. Weitere vorteilhafte Ausgestaltungen ergeben sich aus den Unteransprüchen.

Bei der erfindungsgemäßen Lösung ist zunächst von Vorteil, dass die Anzahl der verwendeten Bauteile erheblich reduziert werden konnte, weil beispielsweise das Laufrad unmittelbar mit einem Hohlrad drehfest verbunden und das Hohlrad das wesentliche Element einer Getriebestufe und des Gehäuses bildet. Durch diese Maßnahmen wird die Anzahl der Bauteile erheblich reduziert, sodass beispielweise eine wesentlich vereinfachte Montage und Demontage der Getriebestufe erfolgen kann. Der wesentliche Vorteil dieser Lösung besteht darin, dass die auftretenden Lastkräfte direkt von dem Fahrzeugrahmen in das Getriebegehäuse und von diesem unmittelbar über das Hohlrad auf die Laufräder übertragen wird, wobei das Hohlrad auf einem Stützelement gelagert ist, welches Bestandteil des Gehäuses ist. Das Getriebegehäuse kann hierbei unmittelbar mit dem Fahrzeugrahmen verbunden werden, beispielweise durch seitliches Anflanschen, sodass die Antriebskomponenten nicht durch aufliegende Lasten in ihrer Funktion beeinträchtigt werden und nur das aufzubringende Drehmoment übertragen müssen.

Bei der erfindungsgemäßen Lösung ist das vorgesehene Hohlrad glockenförmig ausgebildet und übergreift das Stützelement. Das Stützelement selbst ist Bestandteil des Gehäuses beziehungsweise eines Gehäuseteils und kann beispielweise aus einer hohlwandigen Gehäuseglocke bestehen, die zur Aufnahme weiterer Getriebeteile vorgesehen ist. Das Hohlrad selbst ist über entsprechende Lagerelemente herkömmlicher Bauart unmittelbar gegenüber dem Stützelement abgestützt, sodass das Hohlrad zusammen mit dem Laufrad eine sichere Lastaufnahme und Lastübertragung gewährleistet.

Vorzugsweise ist das Getriebe zweistufig ausgebildet, wobei eine erste Getriebestufe mit einer Stirnradverzahnung dem Antriebsmotor zugeordnet ist, während eine zweite Getriebestufe in Form einer nur teilweise ausgebildeten Planetenanordnung dem Laufrad zugeordnet ist. Dadurch lässt sich eine Kraftübertragung mittels einer fein abstimmbaren Übersetzung erzeugen, was die Variabilität und somit auch die Einsetzbarkeit des Getriebes wesentlich erhöhen. Je nach Bedarf lässt sich ein bestimmtes Übersetzungsverhältnis wählen, indem entsprechende Getriebestufen miteinander kombiniert werden.

Zur Abstützung des Laufrades ist erfindungsgemäß ein Gehäusezapfen als Stützelement vorgesehen, welcher axial zur Drehachse des Laufrades angeordnet und mit dem Gehäuse verbunden sein kann. Die Verbindung kann beispielweise durch Einpressen oder durch Verschrauben erfolgen, wobei auch die Möglichkeit besteht, dass der Gehäusezapfen einstückig mit dem Gehäuse oder einem Gehäuseteil ausgebildet ist oder ein Wellenzapfen in einem Durchbruch mit dem Gehäuse verpresst ist. Auf den Wellenzapfen oder Gehäusezapfen sitzen die Lagerelemente auf, die wiederum das Hohlrad abstützen, welches unmittelbar mit dem Laufrad verbunden ist. Hierzu ist zwischen Gehäusezapfen und/oder Wellenzapfen einerseits und Hohlrad andererseits zumindest ein Lagerelement, vorzugsweise ein oder mehrere Wälzlager vorgesehen. Auf diesem Wälzlager stützt sich das Hohlrad ab, sodass eine Belastung der weiteren Getriebekomponenten weitestgehend ausgeschlossen ist. Das Lagerelement ist durch eine Sicherungsscheibe oder einen Sicherungsring und eine Anlageschulter des Hohlrades festgelegt, wobei die Sicherung eines Wellenzapfens in dem Durchbruch ebenfalls durch wenigstens eine Sicherungsscheibe oder einen Sicherungsring erfolgt.

Innerhalb des Getriebegehäuses ist eine erste Getriebestufe vorgesehen, die ein Stirnrad aufweist, welches auf einer Antriebswelle gelagert oder mit dieser einstückig ausgebildet ist. Das Stirnrad kämmt mit einem Antriebsritzel, dass über eine weitere Antriebswelle an den Antriebsmotor, vorzugsweise Elektromotor, koppelbar ist, sodass eine direkte Kraftübertragung stattfinden kann. Die Antriebswelle der Getriebestufen selbst weist weiterhin ein Planetenrad auf und wird in einer Ausnehmung des Gehäusezapfens beziehungsweise des glockenförmigen Gehäuseteils aufgenommen, sodass das Planetenrad ortsfest an der Antriebswelleaber drehbar mit dieser gelagert ist. Das Planetenrad kämmt mit einer Innenverzahnung des Hohlrades, sodass die Kraftübertragung unmittelbar von dem Antriebsritzel des Motors über das Stirnrad und die Antriebswelle auf das Planetenrad und von diesem auf das Hohlrad erfolgt. Als Verzahnung für das Hohlrad wird in vorteilhafter Weise eine Schrägverzahnung gewählt, die eine Geräuschoptimierung ermöglicht. Zur weiteren Reduzierung der Bauteile kann die Antriebswelle und das Planetenrad, die Antriebswelle und das Stirnrad oder die Antriebswelle, das Stirnrad und da Planetenrad einstückig ausgebildet sein.

Das erfindungsgemäße Getriebe ist jeweils für ein Laufrad vorgesehen, wobei zumindest zwei entkoppelte Laufräder eine Antriebsachse bilden, die mit einem solchen Getriebe und einem damit verbundenen Antriebsmotor ausgestattet sind. Über die Antriebsmotoren kann bei Frontachsgetrieben ein Differenzialausgleich der beiden Laufräder einer Antriebsachse erfolgen.

Der wesentliche Vorteil der vorliegenden Erfindung besteht darin, dass das Getriebe mit wenigen Einzelkomponenten auskommt und zudem äußerst robust ist, wobei eine direkte Kraftübertragung der aufzunehmenden Lasten über das Getriebegehäuse auf die Laufräder möglich ist. Darüber hinaus werden die Laufräder durch ein entsprechend dimensioniertes Hohlrad abgestützt, welches wiederum unter Verwendung von Lagern auf einem Stützelement aufsitzt. Das erforderliche Drehmoment wird hierbei über eine Innenverzahnung des Hohlrades übertragen, welches mit einem ortsfest an der Antriebswelle der Getriebestufen angeordneten Planetenrad kämmt, wobei diese Antriebswelle ein Stirnrad ausweist, welches unmittelbar mit dem Antriebsritzel eines anflanschbaren Antriebsmotors kämmt. Somit ist eine direkte Drehmomentübertragung auf das Laufrad ohne große Reibungsverluste möglich. Zudem ist eine kompakte Baueinheit gegeben, die an einem Fahrzeugrahmen eines Flurförderfahrzeuges anflanschbar ist. Soweit ein Differenzialausgleich der Laufräder erforderlich ist, kann dies durch eine entsprechende Steuerung der Elektroantriebsmotoren erfolgen, ohne dass die Getriebe eine Differenzialstufe aufweisen müssen.

Die Erfindung wird im Weiteren anhand der Zeichnungsfiguren nochmals erläutert.

Es zeigen
- Fig. 1: in einer perspektivischen Ansicht ein Flurförderfahrzeug, welches mit einem erfindungsgemäßen Getriebe ausgestattet ist,
- Fig. 2: in einer geschnittenen Seitenansicht ein Ausführungsbeispiel für ein erfindungsgemäßes Getriebe,
- Fig. 3: in einer vergrößerten geschnittenen Darstellung die Einzelheit X gemäß Figur 2 und
- Fig. 4: in einer geschnittenen Teilansicht ein alternatives Ausführungsbeispiel für ein Stützelement.

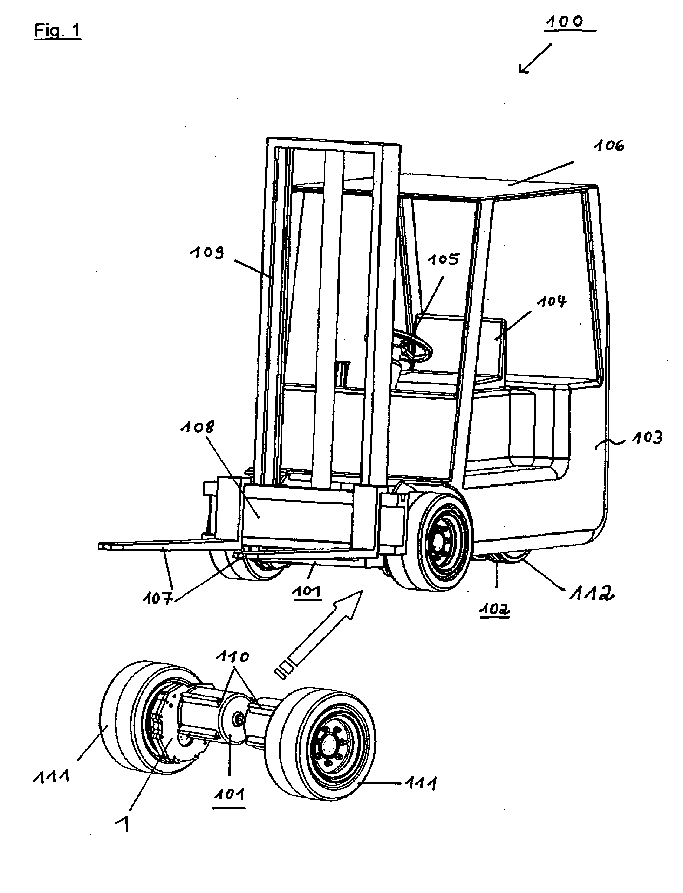

Figur 1 zeigt in perspektivischer Ansicht ein Flurförderfahrzeug 100 mit einer Vorderachse 101 und einem rückwärtigen Lenkgetriebe 102, von dem nur die daran angeordneten Laufräder 112 dargestellt sind. Das Flurförderfahrzeug 100 besitzt einen kastenförmigen Aufbau 103 mit einem Fahrersitz 104 und einer Lenkung 105. Zum Schutz des Fahrers ist über dem kastenförmigen Aufbau 103 ein nach allen Seiten offener, aber im oberen Bereich geschlossener Aufbau 106 vorhanden. Die beide Gabeln 107 dienen zum Anheben von Lasten, wobei ihr Abstand voneinander auf einem Träger 108 eingestellt werden kann. Der Träger 108 kann entlang eines Rahmens 109 in der Höhe verstellt werden, wodurch ein Anheben von Lasten möglich ist. Zum Antrieb des Flurförderfahrzeug 100 sind beispielweise elektrische Antriebsmotoren 110 mit Getrieben 1 und mit Laufrädern 111 vorgesehen. Die Lenkung des Flurförderfahrzeugs erfolgt über die Lenkung 105, welche unmittelbar auf eine lenkbare Hinterachse einwirkt, die aus einem Lenkgetriebe 102 mit daran angeordneten Laufrädern 112 besteht, welche als Doppelbereifung ausgeführt sind.

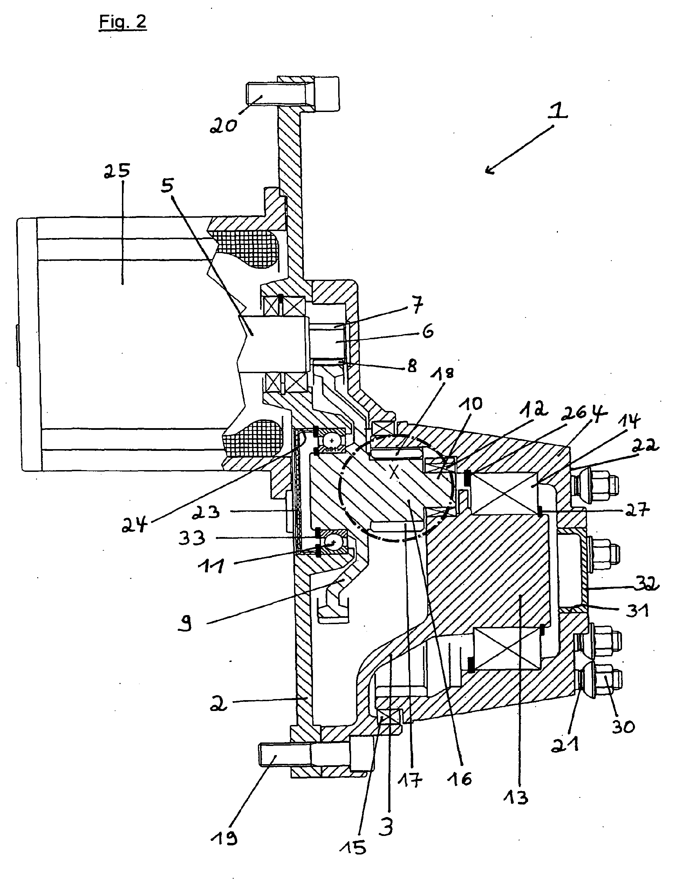

Figur 2 zeigt in einer geschnittenen Seitenansicht eine Ausführungsform eines erfindungsgemäßen Getriebes 1, welches ein zweiteiligen Gehäuse 2, 3 und ein seitlich aufsitzendes, drehbar gelagertes Hohlrad 4 aufweist. Das erste Gehäuseteil 2 wird hierbei mit einem nicht dargestellten Fahrzeugrahmen, beispielweise eines Flurförderfahrzeuges verbunden, sodass die auftretenden Kräfte durch Belastung des Flurförderfahrzeugs über das Gehäuse unmittelbar auf ein ebenfalls nicht dargestelltes Laufrad übertragen werden können. Der Antrieb erfolgt über einen Antriebsmotor 25 mit einer Antriebswelle 5 und einem Antriebsritzel 6. Das Antriebsritzel 6 kämmt mit seiner Verzahnung 7 mit einer Verzahnung 8 eines Stirnrades 9, welches auf einer Antriebswelle 10 gelagert ist. Im gezeigten Ausführungsbeispiel ist das Stirnrad 9 und die Antriebswelle 10 einstückig ausgeführt, wobei die Antriebswelle 10 über Lagerelemente 11 gegenüber dem Gehäuseteil 2 und über ein weiteres Lagerelement 12 gegenüber dem Gehäuseteil 3 abgestützt ist. Die Lagerelemente 11 sind hierbei durch Sicherungsringe 33 im Gehäuseteil 2 festgelegt. Alternativ besteht die Möglichkeit, das Stirnrad 9 und die Antriebswelle 10 zweiteilig auszuführen, wobei das Stirnrad 9 auf der Antriebswelle 10 drehfest gelagert werden kann.

Das Gehäuseteil 3 ist zum Teil glockenförmig ausgebildet und als Stützelement 13 ausgeführt, welches zur Abstützung des Hohlrades 4 vorgesehen ist. Hierzu werden entsprechende Lagerelemente 14 verwendet, die zwischen dem Stützelement 13 und dem Hohlrad 4 angeordnet sind. Als Lagerelemente 14 können sowohl Kugelals auch Wälzlager zum Einsatz kommen, wobei vorzugsweise eine doppelte oder mehrfache Anordnung vorgesehen wird. Das Gehäuse 3 umschließt die erste Getriebestufe, welche aus dem Antriebsritzel 6 und dem Stirnrad 9 gebildet wird, sodass nach außen hin lediglich das sich drehende Hohlrad 4 erkennbar ist, welches bei dieser bestimmungsgemäßen Anordnung am Stützelement 13 einen Teil des Gehäuses ausbildet. Zwischen Hohlrad 4 und Gehäuseteil 3 befindet sich im Weiteren ein Dichtungselement 15, um ein Austreten von Schmiermittel zu verhindern.

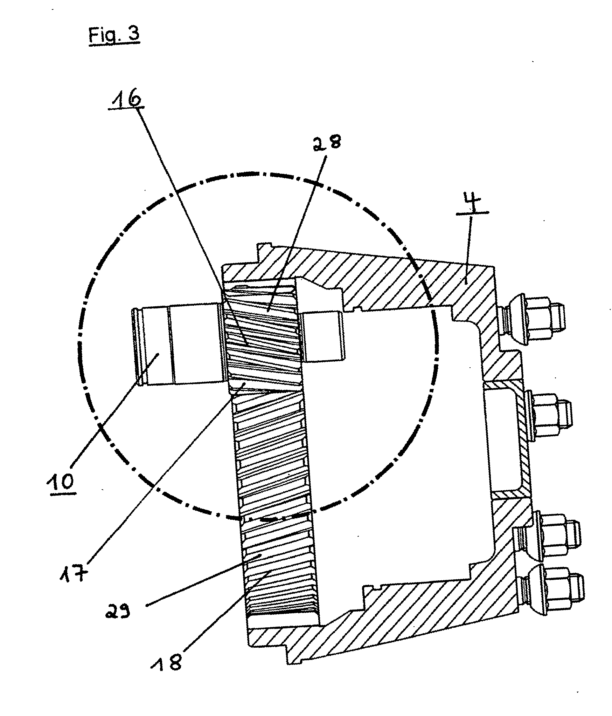

Im Ausführungsbeispiel ist die Antriebswelle 10 ebenfalls einstückig mit einem Planetenrad 16 ausgebildet, das eine Verzahnung 17 aufweist. Gegebenenfalls können die Antriebswelle 10 und das Planetenrad 16 zweiteilig ausgebildet sein, wobei das Planetenrad 16 drehfest auf die Antriebswelle 10 aufgeschoben wird. Das Planetenrad 16 kämmt mit seiner Verzahnung 17 mit der Innenverzahnung 18 des Hohlrades 4, wobei vorzugsweise zur Geräuschoptimierung eine Schrägverzahnung 28, 29 (siehe Fig. 3) eingesetzt wird. Die Festlegung des Hohlrades 4 erfolgt über das Lagerelement 14 und Sicherungsringe 26 und 27. Über Befestigungsbolzen 19 werden die beiden Getriebeteile 2, 3 miteinander und mit dem Fahrzeugrahmen verbunden. Weitere Befestigungsbolzen 20 dienen ebenfalls zur Verschraubung mit dem Fahrzeugrahmen. Zur Montage der Getriebestufe ist im Gehäuseteil 2 ein Gehäusedeckel 23 vorgesehen und zur Aufnahme der Lagerelemente 11 zur Lagerung der Antriebswelle 10 eine Ausnehmung 24.

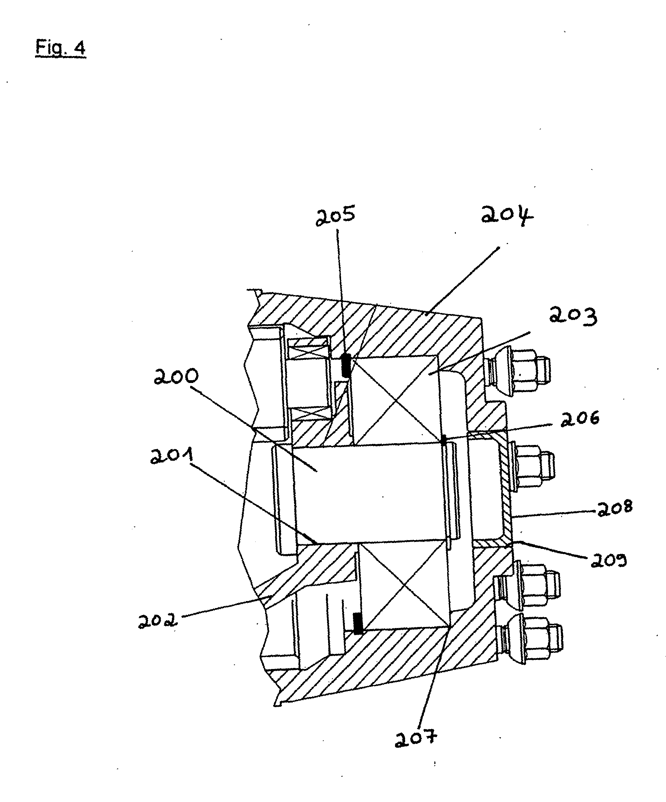

Das nicht dargestellte Laufrad wird wiederum über Stehbolzen 21 und aufgedrehten Kugelbundmuttern 30 unmittelbar mit dem Hohlrad 4 verschraubt, wobei die Stehbolzen 21 in der Stirnfläche 22 des Hohlrads 4 angeordnet sind. Das Hohlrad 4 weist des Weiteren eine Ausnehmung 31 auf, in die ein Stopfen 32 eingesetzt ist. Diese Ausgestaltungen vereinfachen die Montage und Demontage des Getriebes 1, was beispielweise vorteilhaft ist, wenn als Stützelement 13 ein Wellenzapfen 200 (siehe Fig. 4) verwendet wird.

Zweckmäßigerweise erfolgt die Montage des Getriebes 1 derart, dass das Gehäuseteil 3 mit dem Planetenrad 16, dem Stirnrad 9, die Antriebswelle 10 sowie den Lagerelementen 11 und 12 bestückt, anschließend das Gehäuseteil 2 am Gehäuseteil 3 befestigt und danach das Dichtungselement 15 und das Hohlrad 4 montiert wird. Der Motor 25 mit Antriebsritzel 6 kann im Anschluss daran mit Gehäuseteil 2 verbunden werden.

Figur 3 zeigt in einer geschnittenen Teilansicht das Hohlrad 4, die Antriebswelle 10 und das Planetenrad 16, welches mit seiner Verzahnung 17 mit einer Innenverzahnung 18 des Hohlrades 4 kämmt. In dieser Detailzeichnung ist das Planetenrad 16 mit einer Schrägverzahnung 28 ausgestattet und ebenso ist die Innenverzahnung 18 des Hohlrades 4 als Schrägverzahnung 29 ausgebildet. Diese Ausgestaltung der Verzahnung 17 und 18 bewirkt eine Geräuschoptimierung des Getriebes 1 im Vergleich zu einer geraden Verzahnung.

Figur 4 zeigt in einer geschnittenen Teilansicht eine weitere Ausführungsform eines Stützelementes 13. Bei dieser Ausführungsvariante ist das Stützelement 13 als Wellenzapfen 200 ausgebildet und liegt in einem Durchbruch 201 des Gehäuseteils 202 ein. Der Wellenzapfen 200 wird hierbei über Lagerelemente 204 gegenüber dem Hohlrad 203 abgestützt. Die Lagerelemente 204 sind durch einen Sicherungsring 205 in dem Hohlrad 203 festgelegt, wobei die Lagerelemente 204 an einer Schulter 207 anliegen. Der Wellenzapfen 200 wird wiederum durch einen Sicherungsring 206 in dem Durchbruch 201 festgelegt, wobei der Sicherungsring 206 seitlich an dem Lagerelement 204 angeordnet ist. Der übrige Aufbau entspricht weitestgehend der aus Figur 2 bekannten Ausführung.

Weiterhin ist in Figur 4 zu erkennen, dass der Wellenzapfen 200 zugänglich ist, wenn der Stopfen 208 aus der Ausnehmung 209 des Hohlrads 203 entfernt wird, was die Montage und Demontage des Getriebes 1 sehr vereinfacht.

Das erfindungsgemäße Getriebe 1 besteht somit aus wenigen Einzelkomponenten die sehr leicht zusammengebaut und ebenso leicht gewartet werden können. Die Verwendung des Getriebes 1 erfolgt beispielweise als Antrieb für ein nicht lenkbares Laufrad 111 eines Flurförderfahrzeuges 100, wobei die Laufräder 111 paarweise angeordnet sind und jeweils unabhängig von einander angetrieben werden können.

Die anhand der Figuren beschriebenen Ausführungsbeispiele dienen der Erläuterung und sind nicht beschränkend.

### Bezugszeichenliste

- 1: Getriebe
- 2: Gehäuseteil
- 3: Gehäuseteil
- 4: Hohlrad
- 5: Antriebswelle
- 6: Antriebsritzel
- 7: Verzahnung
- 8: Verzahnung
- 9: Stirnrad
- 10: Antriebswelle
- 11: Lagerelement
- 12: Lagerelement
- 13: Stützelement
- 14: Lagerelement
- 15: Dichtungselement
- 16: Planetenrad
- 17: Verzahnung
- 18: Innenverzahnung
- 19: Befestigungsbolzen
- 20: Befestigungsbolzen
- 21: Stehbolzen
- 22: Stirnfläche
- 23: Gehäusedeckel
- 24: Ausnehmung
- 25: Antriebsmotor
- 26: Sicherungsring
- 27: Sicherungsring
- 28: Schrägverzahnung
- 29: Schrägverzahnung
- 30: Kugelbundmutter
- 31: Ausnehmung
- 32: Stopfen
- 33: Sicherungsring
- 100: Flurförderfahrzeug
- 101: Vorderachse
- 102: Lenkgetriebe
- 103: Aufbau
- 104: Fahrersitz
- 105: Lenkung
- 106: Aufbau
- 107: Gabel
- 108: Träger
- 109: Rahmen
- 110: Antriebsmotor
- 111: Laufrad
- 112: Laufrad
- 200: Wellenzapfen
- 201: Durchbruch
- 202: Gehäuseteil
- 203: Hohlrad
- 204: Lagerelement
- 205: Sicherungsring
- 206: Sicherungsring
- 207: Schulter
- 208: Stopfen
- 209: Ausnehmung

## Patentansprüche

1. Getriebe (1), vorzugsweise für eine Frontachse eines Flurförderfahrzeugs (100), aufweisend wenigstens eine Getriebestufe, ein Antriebsritzel (6), ein Hohlrad (4, 203) und ein Gehäuse, wobei das Antriebsritzel (6) und das Hohlrad (4, 204) jeweils eine Drehachse aufweisen, die versetzt zueinander angeordnet sind, ein Laufrad (111) drehfest unmittelbar mit dem Hohlrad (4, 203) verbindbar ist und das Antriebsritzel (6) mit einem an das Getriebe (1) anflanschbaren Antriebsmotor (25) koppelbar ist, wobei das Hohlrad (4, 203) drehbar auf einem feststehenden Stützelement (13) gelagert ist und nach erfolgter Montage an diesem Stützelement (13) einen Teil des Gehäuses ausbildet, wobei das Stützelement (13) koaxial zur Drehachse des Hohlrades (4, 203) angeordnet ist,
**dadurch gekennzeichnet,**
**dass** das Hohlrad (4, 203) über eine Innenverzahnung (18) mit einem Planetenrad kämmt, welches als Antriebswelle (10) ausgebildet mit einer mittig angeordneten Verzahnung (17) ausgestattet ist und zu beiden Seiten der Verzahnung (17) über ein Lagerelement (11, 12) abgestützt ist.

2. Getriebe (1) nach Anspruch 1,
**dadurch gekennzeichnet,**
**dass** das Stützelement (13) ein Gehäusezapfen oder ein Wellenzapfen (200) ist oder durch ein Gehäuseteil in Form einer hohlwandigen Gehäuseglocke gegeben ist.

3. Getriebe (1) nach Anspruch 2,
**dadurch gekennzeichnet,**
**dass** der Wellenzapfen (200) drehfest gehalten, in einem Durchbruch (201) aufgenommen sowie durch einen Sicherungsring (206) festgelegt ist.

4. Getriebe (1) nach Anspruch 2,
**dadurch gekennzeichnet,**
**dass** der Gehäusezapfen mit dem Gehäuse verbunden, vorzugsweise eingepresst oder verschraubt, oder einstückig mit diesem ausgebildet ist.

5. Getriebe (1) nach einem der vorhergehenden Ansprüche,
**dadurch gekennzeichnet,**
**dass** der Gehäusezapfen oder Wellenzapfen (200) zur Aufnahme mindestens eines Lagerelementes (14, 204) vorgesehen sind.

6. Getriebe (1) nach Anspruch 5,
**dadurch gekennzeichnet,**
**dass** sich das Hohlrad (4, 203) auf dem Lagerelement (14, 204) abstützt.

7. Getriebe (1) nach einem der vorhergehenden Ansprüche,
**dadurch gekennzeichnet,**
**dass** das Hohlrad (4, 203) glockenförmig ausgebildet ist und das Stützelement (13) übergreifend abdeckt.

8. Getriebe (1) nach einem der vorhergehenden Ansprüche,
**dadurch gekennzeichnet,**
**dass** das Hohlrad (4, 203) eine Innenverzahnung (18) aufweist.

9. Getriebe (1) nach Anspruch 8,
**dadurch gekennzeichnet,**
**dass** die Innenverzahnung (18) als Schrägverzahnung (29) ausgebildet ist.

10. Getriebe (1) nach einem der vorhergehenden Ansprüche,
**dadurch gekennzeichnet,**
**dass** die Antriebswelle (10) zur Aufnahme eines Stirnrades (9) und eines Planetenrades (16) vorgesehen ist.

11. Getriebe (1) nach Anspruch 10,
**dadurch gekennzeichnet,**
**dass** die Antriebswelle (10) und das Planetenrad (16) einstückig ausgebildet sind, während das Stirnrad (9) auf der Antriebswelle (10) festgelegt ist und/oder die Antriebswelle (10) und das Stirnrad (9) einstückig ausgebildet sind, während das Planetenrad (16) auf der Antriebswelle (10) festgelegt ist und/oder die Antriebswelle (10), das Stirnrad (9) und das Planetenrad (16) einstückig ausgebildet sind.

12. Getriebe (1) nach einem der vorhergehenden Ansprüche,
**dadurch gekennzeichnet,**
**dass** das Antriebsritzel (6) unmittelbar mit dem drehfest mit der Antriebswelle (10) verbundenen Stirnrad (9) kämmt, auf der sich das ortsfest gehaltene Planetenrad (16) befindet.

13. Getriebe (1) nach einem der vorhergehenden Ansprüche,
**dadurch gekennzeichnet,**
**dass** das Getriebe (1) zweistufig ausgebildet ist und eine erste Getriebestufe mit einem Stirnrad (9) dem Antriebsmotor (25) zugeordnet ist, während eine zweite Getriebestufe in Form einer nur teilweise ausgebildeten Planetenanordnung dem Laufrad (111) zugeordnet ist.

14. Getriebe (1) nach einem der vorhergehenden Ansprüche,
**dadurch gekennzeichnet,**
**dass** für jedes Laufrad (111) jeweils ein Getriebe (1) vorgesehen und von einem Antriebsmotor (25) antreibbar ist, wobei zumindest zwei entkoppelte Laufräder (111) eine als Antriebsachse ausgebildete Vorderachse (101) bilden.

15. Getriebe (1) nach Anspruch 14,
**dadurch gekennzeichnet,**
**dass** die Antriebsmotoren (25) der beiden Laufräder (111) der Vorderachse (101) derart ausgebildet sind, dass ein Differenzialausgleich über diese erfolgen kann.

16. Antriebseinrichtung, insbesondere für eine Frontachse eines Flurförderfahrzeugs (100), aufweisend einen Antriebsmotor (25) und ein Laufrad (111),
**gekennzeichnet durch**
ein Getriebe (1) nach einem der Ansprüche 1 bis 15, wobei der Antriebsmotor (25) an dem Getriebe (1) angeflanscht ist und das Laufrad (111) drehfest und unmittelbar an einem als Hohlrad (4, 203) ausgebildeten Gehäuseteil verbunden ist.

## Claims

1. Transmission (1), preferably for a front axle of a forklift truck (100), comprising at least one gear speed, a drive pinion (6), an internal gear (4, 203), and a housing, wherein the drive pinion (6) and the internal gear (4, 203) each comprise a rotational axis arranged offset with respect to each other, a running wheel (111) can be directly connected to the internal gear (4, 203) for co-rotation, and the drive pinion (6) can be coupled to a drive motor (25) that can be flanged to the transmission (1), wherein the internal gear (4, 203) is rotatably mounted on a stationary support element (13), and, after it has been assembled to this support element (13), embodies a part of the housing, wherein the support element (13) is arranged coaxially to the rotational axis of the internal gear (4, 203),
**characterized in that**
the internal gear (4, 203) meshes over an internal toothing (18) with a planetary gear which is embodied as drive shaft (10) and equipped with a centrically arranged toothing (17), and which is supported at both sides of the toothing (17) via a bearing element (11, 12).

2. Transmission (1) according to claim 1,
**characterized in that**
the support element (13) is a housing journal or a shaft journal (200) or is provided by a housing part in the form of a hollow-walled housing bell.

3. Transmission (1) according to claim 2,
**characterized in that**
the shaft journal (200) is held for co-rotation, received in an opening (201) and fixed by a locking ring (206).

4. Transmission (1) according to claim 2,
**characterized in that**
the housing journal is connected to the housing, preferably pressed in or screwed to it, or is embodied in one piece with the same.

5. Transmission (1) according to one of the preceding claims,
**characterized in that**
the housing journal or shaft journal (200) is provided for receiving at least one bearing element (14, 204).

6. Transmission (1) according to claim 5,
**characterized in that**
the internal gear (4, 203) is supported on the bearing element (14, 204).

7. Transmission (1) according to one of the preceding claims,
**characterized in that**
the internal gear (4, 203) is embodied like a bell and covers the support element (13) so as to grip over it.

8. Transmission (1) according to one of the preceding claims,
**characterized in that**
the internal gear (4, 203) comprises an internal toothing (18).

9. Transmission (1) according to claim 8,
**characterized in that**
the internal toothing (18) is embodied as helical gearing (29).

10. Transmission (1) according to one of the preceding claims,
**characterized in that**
the drive shaft (10) is provided for receiving a cylindrical gear (9) and a planetary gear (16).

11. Transmission (1) according to claim 10,
**characterized in that**
the drive shaft (10) and the planetary gear (16) are embodied in one piece, while the cylindrical gear (9) is fixed on the drive shaft (10), and/or the drive shaft (10) and the cylindrical gear (9) are embodied in one piece, while the planetary gear (16) is fixed on the drive shaft (10), and/or the drive shaft (10), the cylindrical gear (9) and the planetary gear (16) are embodied in one piece.

12. Transmission (1) according to one of the preceding claims,
**characterized in that**
the drive pinion (6) directly meshes with the cylindrical gear (9) that is connected with the drive shaft (10) for co-rotation and on which the stationarily held planetary gear (16) is located.

13. Transmission (1) according to one of the preceding claims,
**characterized in that**
the transmission (1) is a two-speed transmission, and a first gear speed with a cylindrical gear (9) is associated to the drive motor (25), while a second gear speed is associated to the running wheel (111) in the form of an only partially embodied planetary arrangement.

14. Transmission (1) according to one of the preceding claims,
**characterized in that**
one transmission (1) each is provided for each running wheel (111) and can be driven by a drive motor (25), wherein at least two uncoupled running wheels (111) form a front axle (101) embodied as drive axle.

15. Transmission (1) according to claim 14,
**characterized in that**
the drive motors (25) of the two running wheels (111) of the front axle (101) are embodied such that differential compensation can be accomplished via the same.

16. Drive means, in particular for a front axle of a forklift truck (100), comprising a drive motor (25) and a running wheel (111),
**characterized by**
a transmission (1) according to one of claims 1 to 15, wherein the drive motor (25) is flanged to the transmission (1) and the running wheel (111) is directly connected to a housing part embodied as internal gear (4, 203) for co-rotation.

## Revendications

1. Transmission (1), préférentiellement pour un essieu avant d'un véhicule de manutention (100), présentant au moins un étage de transmission, un pignon d'entraînement (6), une couronne (4, 203) et un carter, le pignon d'entraînement (6) et la couronne (4, 203) présentant chacun un axe de rotation décalé l'un par rapport à l'autre, la roue (111) pouvant être reliée solidaire en rotation directement à la couronne (4, 203) et le pignon d'entraînement (6) pouvant être couplé à un moteur d'entraînement (25) bridable à la transmission (1), la couronne (4, 203) étant montée rotative sur un élément porteur (13) fixe et formant une partie du carter après être montée sur cet élément porteur (13), l'élément porteur (13) étant disposé coaxialement par rapport à l'axe de rotation de la couronne (4, 203),
**caractérisée par le fait que**
la couronne (4, 203) se met, par l'intermédiaire d'une denture interne (18), en prise avec une roue planétaire équipée, sous la forme d'un arbre moteur (10), d'une denture (17) disposée au centre et s'appuie sur les deux côtés de la denture (17) par l'intermédiaire d'un élément d'appui (11, 12).

2. Transmission (1) selon la revendication 1,
**caractérisée par le fait que**
l'élément d'appui (13) est un tenon de carter ou un tourillon d'arbre (200) ou provient d'un élément de carter en forme de cloche de carter à paroi creuse.

3. Transmission (1) selon la revendication 2,
**caractérisée par le fait que**
le tourillon d'arbre (200) est maintenu solidaire en rotation, est logé dans un orifice (201) et est fixé par un circlip (206).

4. Transmission (1) selon la revendication 2,
**caractérisée par le fait que**
le tenon de carter est relié au carter, préférentiellement par insertion ou par vissage, ou formé d'un seul tenant avec ce dernier.

5. Transmission (1) selon l'une des revendications précédentes,
**caractérisée par le fait que**
le tenon de carter ou le tourillon d'arbre (200) est prévu pour recevoir au moins un élément d'appui (14, 204).

6. Transmission (1) selon la revendication 5,
**caractérisée par le fait que**
la couronne (4, 203) s'appuie sur l'élément d'appui (14, 204).

7. Transmission (1) selon l'une des revendications précédentes,
**caractérisée par le fait que**
la couronne (4, 203) a une forme de cloche et couvre l'élément d'appui (13) par imbrication.

8. Transmission (1) selon l'une des revendications précédentes,
**caractérisée par le fait que**
la couronne (4, 203) présente une denture interne (18).

9. Transmission (1) selon la revendication 8,
**caractérisée par le fait que**
la denture interne (18) présente la forme d'une denture hélicoïdale (29).

10. Transmission (1) selon l'une des revendications précédentes,
**caractérisée par le fait que**
l'arbre moteur (10) est prévu pour recevoir une roue droite (9) et une roue planétaire (16).

11. Transmission (1) selon la revendication 10,
**caractérisée par le fait que**
l'arbre moteur (10) et la roue planétaire (16) sont formés d'un seul tenant, tandis que le pignon droit (9) est fixé sur l'arbre moteur (10) et/ou l'arbre moteur (10) et le pignon droit (9) sont formés d'un seul tenant, tandis que la roue planétaire (16) est fixée sur l'arbre moteur (10) et/ou l'arbre moteur (10), le pignon droit (9) et la roue planétaire (16) sont formés d'un seul tenant.

12. Transmission (1) selon l'une des revendications précédentes,
**caractérisée par le fait que**
le pignon d'entraînement (6) se met directement en prise avec le pignon droit (9) relié solidaire en rotation à l'arbre moteur (10) sur lequel se trouve la roue planétaire (16) maintenue fixe.

13. Transmission (1) selon l'une des revendications précédentes,
**caractérisée par le fait que**
la transmission (1) présente deux étages et qu'un premier étage de transmission doté d'un pignon droit (9) est associé au moteur d'entraînement (25), tandis qu'un second étage de transmission ayant seulement partiellement la forme d'une disposition planétaire est associé à la roue (111).

14. Transmission (1) selon l'une des revendications précédentes,
**caractérisée par le fait que**
une transmission (1) est prévue pour chaque roue (111) et peut être entraînée par un moteur d'entraînement (25), au moins deux roues (111) autonomes constituant un essieu avant (101) présentant la forme d'un essieu moteur.

15. Transmission (1) selon la revendication 14,
**caractérisée par le fait que**
les moteurs d'entraînement (25) des deux roues (111) de l'essieu avant (101) sont formés de telle sorte qu'ils sont aptes à fournir une compensation différentielle.

16. Dispositif d'entraînement, en particulier pour un essieu avant d'un véhicule de manutention (100), présentant un moteur d'entraînement (25) et une roue (111),
**caractérisé par**
une transmission (1) selon l'une des revendications 1 à 15, le moteur d'entraînement (25) étant bridé à la transmission (1) et la roue (111) étant reliée solidaire en rotation et directement à un élément de carter présentant la forme d'une couronne (4, 203).
